# EUROPEAN PATENT SPECIFICATION

(11) **EP 1 846 743 B1**
(45) Date of publication and mention of the grant of the patent: **26.12.2018**
(21) Application number: 05815248.9
(22) Date of filing: 29.11.2005
(51) Int. Cl.: G01M 3/04

(54) **SYSTEM FOR DETECTING THE DEFECTS OF A WALL COATING, AND PROCEDURE FOR MANUFACTURING SUCH A SYSTEM**
SYSTEM ZUR ERKENNUNG DER DEFEKTE EINER WANDBESCHICHTUNG UND PROZEDUR ZUR HERSTELLUNG EINES SOLCHEN SYSTEMS
SYSTÈME DE DÉTECTION DES DÉFAUTS D`UN REVÊTEMENT MURAL ET PROCÉDÉ DE FABRICATION D`UN TEL SYSTÈME

(30) Priority: 30.11.2004 HU 0402459
(43) Date of publication of application: 24.10.2007
(73) Proprietor: Varga, László, 8152 Glattbrugg (CH)
(72) Inventor: VARGA, Lászlo, CH-8452 Glattbrugg (CH); KALAFSZKY, Lászlo, H-1141 Budapest (HU); TÓTH, Imre, H-1161 Budapest (HU)
(74) Representative: Kovari, György
(86) International application number: PCT/HU2005/000126
(87) International publication number: WO 2006/059170

(56) References cited:
- DE-U1- 7 627 844
- GB-A- 2 143 174
- US-A- 3 967 256
- US-A- 5 225 812

## Description

The invention relates to a system for detecting the defects of a wall used for enclosing a space where - generally liquid - materials are stored, with a coating on its internal side, especially a container wall, or/and the defects in the coating.

In numerous fields of life all types of different materials, such as chemicals, solvents, petroleum oil and petroleum fractions, etc. need to be stored in a way excluding the possibility of these materials getting into the environment or other materials from the environment intermixing with the stored materials. In most cases such materials are stored in containers made of different materials, mostly metal, the walls of which holes may appear either as a result of corrosion or other damage, and through the appearing holes materials can flow either from outside into the container or from inside the container into the environment, and so the stored material may become unsuitable for use or serious environmental pollution may occur. In the interest of damage prevention different monitoring systems are used to detect holes appearing in container walls as soon as possible.

One of the known monitoring systems has a coating of three layers applied onto the internal side of the container wall. The first layer directly applied to the container wall is made of so-called "bell-indented" aluminium foil, which contains a continuous system of cavities in between the bulges. Onto this aluminium foil layer a fibreglass-reinforced epoxy resin layer - laminate, that is fibreglass material impregnated with synthetic resin is applied sealing the system of cavities, and onto this layer a third layer resistant to chemical and corrosion effects is applied. If flammable and/or explosive materials are stored in the given container, a fourth antistatic layer is also applied. The system of cavities between the first and second layer is put under vacuum and kept under vacuum during the whole period of monitoring. Holes potentially appearing on the-container wall can be detected when the value of the vacuum changes, which can be monitored continuously. Defects are located with the use of a special high-voltage electric instrument, which is moved along the internal cover after detecting the loss of vacuum - indicated by an alarm - and emptying the container, and the hole can be located where the instrument generates sparks on the coating. One of the disadvantages of this system is that holes only on the very first layer can be detected by moving the instrument along the whole internal surface of the container wall. The applicability of the system is basically restricted by the fact that if the coating also contains the fourth antistatic layer, the method cannot be used, because in this case the instrument generates sparks on the whole surface. There is also a problem with the vacuum space itself, because the aluminium foil layer is made up of overlapping plates, and even in the case of an absolutely precise construction passages resulting in loss of vacuum may appear in the overlapping regions; these passages are impossible to detect, because the instrument can only find holes that are at right angles to the container wall. This fact makes the whole process of detection so uncertain that in more than half of the cases defects cannot be located. Consequently either the complete coating needs to be removed from the internal surface of the container, or a new - complete second - coating needs to be applied onto the already existing coating. Obviously it significantly increases the costs of fault clearing, which, on the other hand, is only possible in the case, if the coating is damaged inside and not the container wall outside. However, in the latter case this system is not suitable at all for locating the defect, as the place of the defect is inaccessible through the layers, and the bell-indented foil produces sparks everywhere when approached by the instrument. It must be pointed out here that in the case of underground containers - where monitoring systems are basically necessary - the container wall is practically inaccessible from outside. (The side-walls of free-standing - normally vertical cylinder-shaped - containers generally do not contain detectors at all, such devices are only used on the bottom plate.) In the case that underground containers are damaged on the outside - that is in the container wall itself -, the defect can be eliminated only by removing the complete internal monitoring system, finding the defect and installing a new warning system.

Another system for detecting faults in container walls is also known and used - although it does not comply with the relating environmental protection prescriptions -, in which the gap between the two layers applied onto the container wall is filled with some liquid, and the loss of this liquid shows when there is a hole on the wall. However, this liquid cannot be water, but a material representing a hazard to the environment; for this reason, when there is a hole on the container wall, the liquid - used for detecting - escaping through the container wall pollutes the environment.

In the case of a further known system used for detecting holes on container walls, a detecting probe is placed at the lowest point of the air-gap between the layers applied onto the side-wall of the container. If liquid - stored medium - gets there from inside the container, the probe detects it and gives an alarm. This solution is problematic, because on the one part it does not detect the appearance of holes on the container wall itself as no liquid gets into the monitored space from outside, and on the other part it does not detect, or not in good time, when a hole appears on the internal layer in the upper part of the tank, or if there is a hole in the wall, because generally material is removed from such containers at certain periods and then they are filled up, so often there is no liquid at all in the upper region of the containers.

USA patent specification No. 5,225.812 describes a lining wall to be constructed along the internal surface of large vessels, first of all supertankers, the basic function of which is to provide mechanical protection for the fluid material, generally crude oil, inside the vessel against leakage or spill therefrom, even when the wall delimiting the storage space is exposed to rather strong dynamic force, e.g.: running aground, attempt of forcible entry, etc. In the interest of this the lining wall is constructed from the following three layers: an outer layer consisting of high-strength polyamide fibres first of all, with a great kinetic energy absorbing ability, which outer layer can be bound with artificial resin, e.g.: PVC or polyester resin and is situated at a certain distance from the internal surface of the vessel wall, because the lining wall is connected to the vessel wall with distance pieces; a middle layer, which consists of a highly flexible resilient film resistant to penetration, e.g.: possible breach or rupture when hitting against something; and an inner layer with chemical resistance fixed to the former layer with adhesive bonding. According to the specification an array of electrodes can be fixed to the surface of one or more layers, which array of electrodes is connected to control circuits by electric cables; and both the control circuits and the array of electrodes are connected to a power source. These components together form a monitoring-alarm system. If as a result of the damage of the lining wall or vessel wall electrically conductible fluid gets between the electrodes of the array, the voltage drop changes between them, the power source operates the control circuit, and the system indicates the voltage drop electrically.

The subject of USA patent specification No. 5,191.785 relates to a solution for detecting damage on the lining resistant to chemical effects of vessels consisting of a load-bearing outer shell made of fibreglass-reinforced polyester and an inner lining, which solution is based on that between these two layers a middle layer with electric resistance properties, e.g. a graphite veil, is inserted, which is connected to a system containing an array of electrodes and a main electrode. In this case too alarm is generated, because through the damage fluid gets between the electrodes of the array, which results in the changing of the voltage drop between them.

EP No. 0 354 673 solvent-detecting sensor operation on the basis of a similar principle, that is via using arrays of electrodes and electric contact established by the fluid getting between them.

International application No. WO 91/10889 relates to a sealing film with an electric measuring instrument for detecting leaks in the film. Groups of measuring leads not insulated electrically, situated at a distance apart, are arranged on both sides of the film and connected to an electric measurement device. Alarm is generated by fluid flowing in due to a leak in the film and establishing electric contact between the leads on the two sides.

Finally the layer for lining liquid containers forming the subject of UK patent specification No. 2,143.174 also contains a leak detecting system, in the case of which the liquid penetrating through the leak generates electric contact between the electric cables situated at a distance apart parallel to each other, and initiates alarm by this.

The last three solutions mentioned above are practically based on the same principle - that is electric contact generated by the liquid penetrating through the leak - as USA patent specification No. 5,225.812,.

The US 3,967,256 relates to an integrity monitoring system for storage tank insulation used for the containment of fluid materials, particularly flluid materials at cryogenetic temperatures, e.g., liquefied natural gas.

The task to be solved with the invention is to realise a system for detecting defects in walls used for enclosing a space where materials are stored, with a coating on its internal side, especially container walls, or/and the defects in the coating, which system, by completely overcoming the deficiencies of other known solutions of this nature described above, makes it possible to locate and repair external or internal defects quickly, clearly, in a simple way, at a reasonable cost.

The invention is based on the recognition that if instead of a coating of structurally separate layers the monitoring system has a coating created as one single solid unit in which the actual monitoring layer is also embedded, and it indicates the occurrence of holes in the internal coating in an electronic way, the coating can be of higher strength than the known ones, the defect can be quickly and clearly located, and so the risk of environmental pollution and/or material loss can be reduced to the minimum, and the presence of materials penetrating the container from the outside can also be detected quickly and safely.

On the basis of the above recognition, in accordance with the invention the set task was solved with a system for detecting defect in wall with a coating on its internal surface and/or the defects in the coating, the walls used for enclosing a space where materials are stored, which system has detector parts embedded in its coating and a detection device in operating connection with the detector parts ;
- the coating has a monitoring layer fixed directly or indirectly to the internal surface of the wall, the monitoring layer is a laminate with a base layer made of a porous flexible material onto which the detector parts are applied, the monitoring layer defining monitoring layer parts, each with one detector part in operating connection with the detection device independently from each other;
- the base layer is at least partly impregnated with a laminating material containing synthetic resin as a binding material;
- a covering layer made of synthetic resin, resistant to mechanical and - optionally - chemical effects is applied onto the monitoring layer;
characterised in that:
- in each monitoring layer part the detector part is made of an electrically conductive material formed by a line-pattern having two poles configured to establish electric contact and each pole being connected to the detection device;
- each detector part is electrically connected to the electronic detection device separately. Preferably the detector parts are made of a solid material consisting of the mixture of synthetic resin and powder metal.

According to another construction example, the detector parts on the individual monitoring layer parts are spiral line-pattern created by printing, for example screen printing, with sections spaced at a certain distance from each other and at least two points each for electric connection; it may be preferable, if both surfaces of the base layer are provided with a detector; and if the neighbouring monitoring layer parts are situated in a way that at least their edges overlap each other. In accordance with another feature of the invention is that a practically epoxy/furan resin-based synthetic resin layer with antistatic characteristics and/or good chemical resistance is applied onto the covering layer; at the same time it must be pointed out that the covering layer itself may also be made of such materials with antistatic characteristics and/or good chemical resistance. In accordance with an other characteristic feature of the system a synthetic resin-based adhesive layer is inserted between the monitoring layer and the internal surface of the wall.

In the course of the procedure for manufacturing the system a coating containing a detector is made, and the detector is connected with a detection device, and this procedure is characterised in that
- along the internal surface of the wall a laminate monitoring layer having a base layer made of a porous flexible material onto which the detector parts are applied is created in a way that separate monitoring layer parts, each with one detector part, at least one surface of which is made of an electrically conductive material formed by a line-pattern having two poles suitable for establishing electric contact, are fixed directly of indirectly to the internal surface of the wall the base layer is impregnated at least partially with an after-hardening laminating material containing synthetic resin as a binding material;
- applying a covering layer mad of synthetic resin, resistant to mechanical and - optionally - chemical effects onto the monitoring layer;
- each detector part is electrically connected to the electronic detection device separately by connecting the two poles of each detector part to the detection device. Practically a flexible and elastic material, preferably thick filter-paper, practically woven textile made of a natural or artificial material; or porous foil, such as EVA copolymer foil that clings to epoxy resin is used as a base layer.

According to a preferable realisation of the procedure the material of the detector is made as follows:
- 60-40 w% of EP resin is mixed with 40-60 w% of solvent and/or diluting agent, and a fluid, viscous material is gained;
- 10-35 w% of the material gained in this way is mixed with 6-25 w% of solvent, 40-60 w% of powder metal, preferably copper, silver or nickel powder or a mixture of them, and - optionally - 1-4 w% of thixotropic agent;
- the latter mixture is mixed with a cross-linking agent in a proportion of 2 ÷ 16 : 1, preferably 6 : 1; and
- the viscous material gained in this way is applied onto at least one surface of the carrier in a continuous layer or/and in a pattern formed by lines running beside each other, for example in a spiral pattern, preferably with a printing process, such as screen printing.

In accordance with another feature of the procedure 70-98 w% of EP resin is mixed with 2-10 w% of solvent and/or diluting agent until a viscous material is gained, which is mixed with a preferably organic amine cross-linking agent in a weight proportion of 1 ÷ 6 : 1, preferably 2 : 1; the laminating material gained in this way is used to impregnate the base layer containing the detector completely, also sealing the detector; after the synthetic resin has set, the created monitoring layer parts are fixed to the container wall with some adhesive; or the carrier material containing the detector is completely impregnated with the final product gained, and it is applied to the wall surface before the resin sets using by this the laminating material itself as an adhesive. Practically a first liquid bisphenol A type EP resin in a proportion of 20-30 w% and a second EP resin suitable for increasing the chemical resistance of the final product in a proportion of 50-80 w% should be used for making the mix; and 0.1-0.5 w% of antifoarning agent, 0.1-1.0 w% of anti-bubble agent and - optionally - 0.1-3.0 w% of EP-based dye paste and 1-4 w% of thixotropic agent should be added to the mixture; and two types of solvents, 1-5 w% of a volatile solvent, practically methyl ethyl ketone, and another 1-5 w% of a less volatile solvent, preferably ethyl alcohol should be used.

According to another realisation of the procedure the material used for fixing the set - precast - monitoring layer parts to the container wall is made by
- dissolving 40-60 w% of EP resin in 2-10 w% of solvent into a viscous material, adding 30-60 w% of filling material to it and making a first mixture;
- dissolving 60-80 w% of organic cross-linking agent in 1-5 w% of solvent into a viscous material, adding 15-25 w% of filling material to it and making a second mixture;
- mixing together the first and second mixture in a weight proportion of 2 ÷ 10 : 1, preferably 3.3 : 1; and
- applying the adhesive forming an adhesive bridge between the wall surface and the precast monitoring layer parts, and allow the adhesive layer to set. In this case it may also be preferable, if two types of EP resin are used for making the first mixture, both in a proportion of 20-30 w%; and two types of solvents are used, both in a proportion of 1-5 w%; and - optionally - 0.1-1.0 w% of anti-foaming agent, 0.1-3 w% EP-based dye paste, 1-5 w% of pigment, preferably titanium oxide, 1-4 w% of thixotropic agent, preferably Aerosil, and 0.1-1 w% of anti-bubble agent is added to the mixture. According to another feature of the invention methyl ethyl ketone is used as a solvent to make the second mixture, and 0.1-1 w% of processing compound and 0.5-5 w% of thixotropic agent is added to it. Generally talc or/and barytes or/and kaolin or/and silica flour or/and calcium carbonate is used as a filling material.

According to another preferable method of realising the procedure one side of the base layer is impregnated with epoxy/furan hybrid resin composition as a laminating material only partly - preferably 10-20% of its width -, and after it sets this laminated surface of the monitoring layer parts is fixed to the container wall.

Practically the covering layer is made of the same material as the material used for fixing the precast monitoring layer parts (adhesive bridge).

Below the invention is described in detail on the basis of attached drawings containing a preferable construction and a few partial solutions of the system. In the drawings
figure 1 shows a part of a container wall in diagrammatic front-view, together with a construction of the detection system connected to it;
figure 2 shows a part of a container wall with a coating according to the invention, on an increased scale;
figure 3 shows a part similar to figure 2; here the wall with the coating is the bottom plate of a damage prevention vessel;
figure 4 shows a possible construction of the monitoring layer of the coating of the system, in top view;
figure 5 shows the section along the A - A line shown in figure 4.

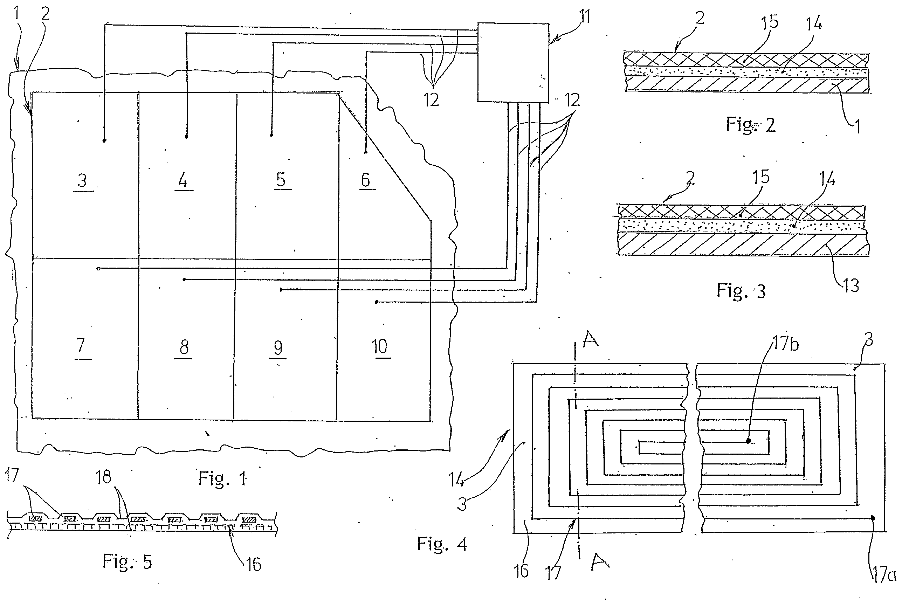

Figure 1 is a schematic drawing of the monitoring-detection system according to the invention showing a part of the internal surface of a wall 1, such as a container wall, enclosing a space used for storing materials, with a coating marked with reference number 2 as a whole. The coating 2 is made up of coating-parts 3-10 - fields -, each one of which contains an electrically conductive detector, which detectors operate independently from each other and are in operating connection with a central electronic detection device 11 - instrument - through electric cables 12 and/or by inserting an intelligent circuit. The individual coating-parts 3-10 (layers) are fixed to the surface of the wall 1 continuously, free from joints and cavities, overlapping each other, in a way that they are numbered and assigned at an appropriate place on the basis of a scheme plan; and they are connected in the detection device 11 with detecting-alarm units assigned to each one of them separately through cables 12 and/or by inserting an intelligent circuit. The detection device 11 has feeding, measuring, display and supplementary units and tools, and it monitors and detects the changes of the electric characteristics of the monitoring layer of the coating 2. The extent and method of measuring changes can be chosen in each case; the measuring methods can be traditional. The currently chosen methods, which must be in compliance with the function of the facility to be monitored and the requirements prescribed in connection with it, can be very different, because completely different requirements are prescribed with respect to a container in which explosive materials are stored than with respect to a waste storage container. The methods of alarm given by the detection device 11 can also depend for example on the user's demands or on the emergency of the currently occurring alarm. The system shown in figure 1 operates in a way that if a hole occurs either outside on the wall 1 or inside in the coating 2 - which obviously results in the damaging of the above described electric detector - the detection device 11 gives an alarm immediately relating especially to the part of the coating where the hole occurred; this is clearly due to the method of making the coating 2 described above. At the same time it also means that independently from the factor causing the internal or external damage, without having to search or independently from visibility the exact place of repair - which can only be on an area suiting the extent of the affected coating-part 3-10 - can be located practically automatically. If it becomes necessary to repair the coating 2 or/and the wall 1, the affected area can be covered with a new coating-part, and it can be connected to the detection device 11 with a cable 12 and/or by inserting an intelligent circuit.

Figure 2 shows a part of a possible construction of the coating 2 of a detecting system according to the invention, on an increased scale, but - in the interest of better comprehensibility - it is not necessarily a precisely scaled drawing. The monitoring layer 14 containing the detection device mentioned above is applied to the internal surface of the container wall 1. On top of the monitoring layer 14 fits the covering layer 15, the task of which is to protect the former layer against mechanical and chemical effects. The covering layer 15 - similarly to the monitoring layer 14 - is made on the spot, and it is made of a material to be chosen to suit the current demands, depending on the requirements prescribed with respect to it; several materials may be suitable for this purpose. The only difference between the constructions shown in figure 3 and figure 2 is that in figure 3 the thicker wall 13 is a part of a damage prevention vessel rather than a container, but practically the coating is the same as the coating used in the construction in figure 2.

In the following the method of creating the monitoring layer 14 is described on the basis of figures 4 and 5. The monitoring layer 14 is a laminate with a base layer 16 made of a flexible material suitable for printing procedures (e.g.: screen printing), such as paper, textile, foil, etc. The detector 17, mentioned above several times, made of an electrically conductive material is applied to the base layer 16 practically by screen printing, and in this case the said detector 17 (compound) is formed by a spiral-shaped, electrically conductive thin strip occupying the whole area of one of the coating-parts 3-10, more precisely coating-part 3 (figure 4), and the ends 17a, 17b of this strip are connected to a closed-circuit detection device 11. The material of the detector 17 (compound) will be described in detail later. It must be pointed out here that the detector 17 may be formed by a continuous layer or by patterns with regions of different density; generally its construction depends on the strictness of the environmental protection requirements prescribed with respect to the given monitoring-detection device. The prefabricated plate formed by the flexible base layer 16 containing the detector 17 is laminated, that is it is impregnated with the laminating material marked with reference number 18 in figure 5, which is chosen to comply with the requirements prescribed with respect to the given facility to be monitored both from the aspects of solidity and chemical resistance.

The size and shape of the precast monitoring layers 14 can be chosen optionally, depending on the shape (also in space) and size of the surface to the be monitored, and on how strict and precise the monitoring is required to be. The monitoring layer parts - plate-parts - of a certain size, completely covering the surface to be monitored overlap each other in order to facilitate the prefabrication of many monitoring layer plates of the same size. The individual plates - as it has been mentioned above - are numbered on the spot, and a local assignment drawing is made, and the laminated surface of the individual plate-parts 18 is fixed to the surface of the wall 1 to be monitored on the spot, free from joints and cavities, and by this a continuous coating 2 is created on the desired area (figures 1-3).

Below the invention is described in detail with the help of process examples.

### Example 1

The internal surface of a container with cylindrical steel wall is equipped with the monitoring system according to the invention, in the following steps:
in the first step the material of the detector (compound) is made according to the following:
50 w% of epoxy hard resin is mixed with 35 w% of xylol solvent and 15 w% of PMA solvent, and by dissolving the EP resin a viscous substance is gained. 30 w% of this basic substance is mixed with 10 w% of xylol solvent, 5 w% of methyl ethyl ketone solvent, 2 w% of thixotropic agent and 53 w% of powder metal containing copper and silver to ensure electric conductivity. The cross-linking agent is mixed to this thick, viscous mixture in a proportion of 6 : 1. The final product gained is a thick, viscous material, the consistency of which is suitable for printing processes, such as screen printing. The appropriate state is ensured by the mixture components described above and their prescribed quantities, and by the viscosity and pot life achieved in this way.

While this product is still in a viscous state, it is applied onto a base layer in a certain pattern, e.g.: a spiral pattern, by screen printing, and the base layer is a relatively flexible and elastic paper plate, which has an appropriately loose, soft, porous and moisture-absorbing textile-like material that can be impregnated with synthetic resin, that is laminated. On the basis of technological aspects and measuring adhesive power we selected a relatively thick type of paper with the following technical parameters:

| | |
|---|---|
| - thickness | δ = 380-390 µm |
| - square weight | G = 178-180 g/m² |
| - impregnability | I = 500-700 g/m² |
| - period of impregnability: | T = 10-20 min/A4 sheet size/700 µm layer width |
| - adhesive power/cohesion strength, on steel plate, impregnated with three layers of synthetic resin (assuming chemical surface preparation): d = 85 - 102 kg/cm² | |

The electrically conductive product containing metal particles is applied onto the base layer by screen printing, in the form of a single spiral line practically of the same thickness of 50 µm and width of 2 mm. The distance between the neighbouring line sections is 2 mm wide. As a result of these dimensions the detector formed by the spiral pattern covers the given area - determined by the dimensions of the base layer - so densely that practically any damage on this surface results in the interruption of the detector and the circuit.

The material of the detector applied by screen printing sets on the base layer. The dry content of the completely set material is about 84-85%, and 69-73% of this is powder metal, and its specific conductance and volume resistivity is below 100 Ω * cm.

In the next step the laminating material is made by dissolving the basic epoxy resin components first, as a result of which a viscous preliminary mixture (EP resin, "A" component) is gained.

The composition of the "A" component (preliminary mixture):

| | |
|---|---|
| bisphenol A based EP liquid resin | 55.0 w% |
| EP reactive diluting agent (glycidyl ether type) | 40.0 w% |
| solvent | 5.0 w% |

This "A" component (preliminary mixture) is used for making the finished resin mixture ("C" component), which is finally mixed with a cross-linking agent. The finished resin mixture ("C" component) is produced according to the following mix design:

| | |
|---|---|
| "A" component (preliminary mixture, EP resin) | 26.0 w% |
| anti-foaming agent | 0.2 w% |
| anti-bubble additive | 0.5 w% |
| solvent I | 3.0 w% |
| dye paste (iron oxide - epoxy resin mixture) | 2.3 w% |
| "B" component (liquid EP resin) | 62.0 w% |
| thixotropic agent | 2.0 w% |
| solvent II | 4.0 w% |
| Total: | 100.0 w% |

The "A" component (preliminary mixture) is ordinary liquid bisphenol A (or epoxy-novolac) EP basic resin, and its primary task is to set the appropriate viscosity of the final product, while the task of the "B" component is to ensure chemical resistance, so it is always chosen depending on the nature of the stored material. The two types of solvents (solvent I and solvent II, e.g.: ethyl alcohol and methyl ethyl ketone) have different volatility characteristics, by changing their proportion the period of dissolution, the viscosity and the pot life can be influenced. The antifoaming and anti-bubble agents are processing additives, while the thixotropic agent facilitates lamination on vertical surfaces.

The finished resin gained on the basis of the above mix design ("C" component), the Brookfield viscosity value of which at 23 °C is 4000 mPa*s, is mixed with amine cross-linking agent with a viscosity value of ≈ 1000 mPa*s at 23 °C in a proportion of 2:1. The pot life of the final product (100 g, at 25 °C) is 52 minutes.

This material is used to laminate, that is impregnate the paper containing the electrically conductive detector in a way that the laminating material covers the detector except for the poles to be electrically connected, that is the ends of the spiral line in this case. These ends are also laminated subsequently, after electric connection has been established.

Before the monitoring layer parts produced according to the above are applied onto the metal container wall, the internal wall surface is cleaned mechanically, the surface is prepared chemically and cleaned with jet-spray. In the following step the cleaned surface is made "even", that is thixotropic plastic stuff - mortar - with a high filling material content is applied onto it to smooth off edges and indents, and by creating an intermediate adhesive layer - adhesive bridge - of a thickness of about 500 - 1000 µm an even surface is achieved onto which the precast monitoring layer can be applied. The material of this adhesive bridge layer is made according to the following:
In the first step two types of epoxy resin is dissolved into a viscous material on the basis of the following mix design:

| | |
|---|---|
| EP resin I (liquid) | 20.0 w% |
| EP resin II (liquid) | 20.0 w% |
| antifoaming agent | 0.5 w% |
| filling material I (fine) | 15.0 w% |
| dye paste (EP-based, green) | 1.5 w% |
| titanium dioxide (pigment) | 3.0 w% |
| filling material II (solid, cheap) | 32.5 w% |
| thixotropic agent | 2.0 w% |

At 23 °C the viscosity value of the mixture is about 7,000 mPa*s. EP resin type "I" is needed to set viscosity, while EP resin type "II" is needed to ensure chemical resistance. For example talc can be used as filling material type "I", and for example barytes can be used as filling material type "II". The two types of solvents (e.g.: ethyl alcohol, toluene) used in an appropriate proportion are needed to set volatility and viscosity in this case too. For example Aerosil can be used as a thixotropic agent.

30 w% of the viscous material gained in this way is mixed with the following mixture in a proportion of 3.3 :1.

| | |
|---|---|
| organic amine cross-linking agent | 70.0 w% |
| filling material, barytes | 23.0 w% |
| solvent | 4.0 w% |
| processing compound | 0.5 w% |
| thixotropic agent | 2.5 w% |
| | Total: 100.0 w% |

At 23 °C the viscosity of this mixture is about 7,500 mPa*s. The filling material can be for example barytes, the solvent can be for example methyl ethyl ketone, the processing compound can be for example Byk, and the thixotropic agent can be for example Aerosil.

The pot life of the final product is 66 min (100 g of final product, 23 °C), so there is enough time for applying the base layer.

Before the layer sets, the precast monitoring layer parts are fixed to the adhesive bridge by printing, in a way that they overlap each other along their edges.

Laminating is performed so that the two free ends of the spiral line forming the detector and the connecting strips needed for the electric/electronic connection remain clean, free from the laminating material (these points will be laminated later), but otherwise the laminating material should cover completely all the rest of the spiral pattern (see figure 6).

As an alternative solution, in order to fix the monitoring layer parts even more securely, an intermediate adhesive layer applied onto the "safe deposit" layer can also be used. In this case the monitoring layer parts are laminated as a part of the prefabrication process, and the set laminate is fixed to the container wall or onto the "safe deposit" layer, after appropriate surface preparation.

After applying the monitoring layer parts the free ends of the detector - spiral - are electrically connected, joined according to a certain order (a map is made containing numbers on the local arrangement and connection of the wallpapers). Connection is realised with a specially processed, so-called conductive hot fusion based adhesive and/or by riveting. The adhesive is applied onto the surface with an electrically heatable gun method (at about 180 °C). The electrically connected points or strips of the applied monitoring layer and the electric characteristics of the whole detector are checked, it must be determined whether the device, the contact and the connection are in perfect condition.

Following this step the covering layer is applied onto the monitoring layer, and after it sets the complete coating is available. The material of the covering layer can be the same as the material of the adhesive bridge described above.

The coating produced as described above was examined from the aspect of adhesive and cohesion strength, and it was found that in the given case the adhesive and cohesion strength was 92.5 kg/cm² on average, which can be regarded as excellent (Elcometer Adhesion Tester, Erichsen, Germany). The breaking surface showed that the material breaks off mainly in its layer and partly from the steel surface (breaking picture).

The flat cables coming out of the individual connected surfaces of the finished monitoring system are taken along the bottom of the container (they may also be laminated), and they come out at the dome cover of the container, while it must be kept in mind cables of which colour need to be connected to the given wallpaper surfaces.

The cables are taken to an electric/electronic data receiving, data evaluating, data processing, computerised evaluating, alarm and display unit comparing the changes of the electric characteristics. The individual monitoring layer parts are continuously monitored and checked one after the other. The bottom and top limits of the changes of the possible electric characteristics are determined regarding the individual measured values, because the values may also change in themselves, for example as a result of changes in the ambient temperature, material temperature or pressure. Only deviations and great changes stretching beyond this previously determined range are regarded as alarming. In the case of danger the evaluating computer system gives an alarm, determines the serial number (and maybe the location) of the damaged monitoring layer part(s) in the container and sends a message to the general contractor's mobile telephone about the defect, and also displays the defect on the site for the user. If the monitoring layer part or the composite system applied onto the surface of the container becomes damaged, e.g.: capillary cracks occur on it, then the medium stored in the container may get to the monitoring layer and interrupt it somewhere, or it may get in between the conductive layers and interrupt the circuit as an insulator. It is detected by the electronic computerised measuring instrument system.

### Example 2

In every respect to procedure described in example 1 is followed, but in this case a fourth, internal hybrid resin-based covering layer with antistatic characteristics and good chemical resistance is also applied onto the covering layer. This layer is produced on the basis of the following mix design:

| | |
|---|---|
| polyol polyurethane resin pigment | 5.0 w% |
| filling material | 15.0 w% |
| conductive black | 0.5 w% |
| thixotropic agent | 1.5 w% |
| solvent I | 20.0 w% |
| solvent II | 6.0 w% |
| powder metal (conductive additive) | 20.0 w% |
| | Total: 100.0 w% |

The two solvents may be for example toluene and methyl ethyl ketone, the filling material may be for example calcium carbonate, the pigment may be for example titanium dioxide. The gained viscous material with a viscosity value of > 5000 mPa*s at 23 °C is mixed with a cross-linking agent with a viscosity value of about 1600 mPa*s at 23 °C in a proportion of 5 : 1. This viscous material is applied onto the covering layer surface with a method already known in itself, and it is left to set.

The chemical resistance of the set grey antistatic layer was examined in gas oil, and it was found that the test lasting for 12 weeks (2016 hours) at 23 °C did not result in any significant changes in the weight or in the Shore D solidity of value of about 73.

### Example 3

The procedure according to example 1 is followed, but in order to produce the electrically conductive material of the detector carbon black, graphite and their mixture was used.

### Example 4

In every respect to procedure described in example 1 is followed, but in this case the base layer with the detector is not impregnated to its complete width, only partly. The surface of the base layer facing the container wall is coated with a flexible epoxy/furan hybrid resin composition.

The set black layer made of this material firmly sticking to metal or other surfaces has excellent chemical resistance to petrol and petrol derivatives (e.g.: petrol with octane number 95/98, diesel and other fuels). This material impregnates the base layer (paper) only partly, to an extent of about 10% of its width, and it does not impregnate the material of the detector at all, at the same time the base layer can be coated with it well, so the pores of the carrying material are impregnated with resin only to a small extent mentioned above, otherwise they remain "dry". Practically such a construction can be used when in the monitoring system the deficiency of the required compactness is detected so that through capillary cracks the medium stored in the container gets into the pores of the base layer (paper) and changes its electric characteristics (e.g.: dielectric constant, performance, resistance, etc.), which can be detected easily.

### Example 5

The procedure according to example 1 is followed, but instead of a paper base layer in this case polar, paper-like plastic foil, more exactly 300 µm thick flexible EVA copolymer-based extruded foil base layer is used.

### Example 6

The procedure according to example 1 is followed in every respect, with the only difference that instead of applying the monitoring layer onto the prepared container wall by inserting an adhesive layer (adhesive bridge), in this case the base layer containing the detector is impregnated with laminating material on the spot, in its position directly fixed to the container wall, and the laminating layer works as an adhesive fixing the monitoring layer to the surface of the container wall.

In this case too the laminating material is prepared according to example 1, with the only difference that component "A" is produced from the following components:

| | |
|---|---|
| bisphenol A based EP liquid resin | 45.0 w% |
| solid EP resin (melting point: 60-80 °C) | 20.0 w% |
| EP reactive diluting agent (glycidyl ether type) | 30.0 w% |
| solvent | 5.0 w% |
| | Total: 100.0 w% |

The final product component "C", which is a material of a viscosity value of about 8,000 mPa*s at 23 °C, is mixed with organic amine cross-linking agent with a viscosity value of 1,000 mPa*s at 23 °C in a weight proportion of 2:1. In the case of 100 g of final product the pot life is 52 minutes at 25 °C.

Mainly due to the high solid resin content of component "A" this material sticks to the metal supporting wall with a great adhesive strength, and if the base layer with the detector is laminated on the spot, the laminating material also functions as EP adhesive, and - as it has been pointed out above - it makes the adhesive bridge described in example 1 unnecessary.

### Example 7

The procedure according to example 1 is followed in every respect, but in this case the monitoring system is created by applying the coating onto the internal surface of the bottom plate and side walls of a reinforced concrete tank used for storing waste. In order to prepare the surface the concrete is milled, or polished and, if necessary, made smooth using synthetic resin mortar. The monitoring layer can also produced by lamination on the spot.

The invention has the following advantageous effects:
the system is completely suitable for detecting damage or holes occurring both on the internal and external surface of containers, that is it detects even holes occurring for example as a result of corrosion on the external surface of containers, for which the earlier solutions designed for a similar purpose were not suitable at all. The exact location of the defect enables the simplest and quickest repair of the defect possible at a minimum cost and live-labour demand: it is not necessary to remove the complete coating physically, mill it, like in the case of other known systems, all that needs to be done is to determine the area to be repaired on the coating of the container on the basis of the map of numbers, and in the case that there is a hole on the container wall a new monitoring layer needs to be fixed to the given coating part and electrically connected to the system. The electric characteristics of the given new surface and the "tolerable" range of changes are calibrated, and as a result of this the monitoring layer originally fixed to the container wall directly can be replaced completely with the new "circuit" newly created on top of it and integrated onto the composite layer.

Obviously the invention is not restricted to the concrete construction of the system described above or to the methods of realisation described in the examples, but it can be realised in several different ways within the scope of protection defined by the claims.

## Claims

1. System for detecting defect in wall with a coating (2) on its internal surface and/or the defects in the coating (2), the walls used for enclosing a space where materials are stored, which system has detector parts (17) embedded in its coating and a detection device (11) in operating connection with the detector parts (17);
- the coating (2) has a monitoring layer (14) fixed directly or indirectly to the internal surface of the wall (1), the monitoring layer (14) is a laminate with a base layer (16) made of a porous flexible material onto which the detector parts (17) are applied, the monitoring layer (14) defining monitoring layer parts, each with one detector part (17) in operating connection with the detection device (11) independently from each other;
- the base layer (16) is at least partly impregnated with a laminating material (18) containing synthetic resin as a binding material;
- a covering layer (15) made of synthetic resin, resistant to mechanical and - optionally - chemical effects is applied onto the monitoring layer (14);
**characterised in that**:
- in each monitoring layer part the detector part (17) is made of an electrically conductive material formed by a line-pattern having two poles (17a, 17b) configured to establish electric contact and each pole (17a, 17b) being connected to the detection device (11);
- each detector part (17) is electrically connected to the electronic detection device (11) separately.

2. System according to claim 1, **characterised in that** the detector (17) parts are made of a solid material consisting of a mixture of synthetic resin and powder metal.

3. System according to claims 1 or 2, **characterized in that** the detector parts (17) on the individual monitoring layer parts are spiral line-patterns created by printing with sections paced at a certain distance from each other.

4. System according to any of claims 1-3, **characterised in that** both surfaces of the base layer (16) are provided with a detector (17).

5. System according to any of claims 1-4, **characterised in that** neighbouring monitoring layer (14) parts are arranged in a way that at least their edges overlap each other.

6. System according to any of claims 1-5, **characterised in that** hybrid resin-based synthetic resin layer with antistatic characteristics is applied onto the covering layer (15).

7. System according to any of claims 1-6, **characterised in that** a synthetic resin-based adhesive layer is inserted between the monitoring layer (14) and the internal surface of the wall (1).

8. Procedure for the manufacturing of a system for detecting defects in walls with a coating (2) on its internal surface and/or the defects in the coating (2), the walls used for enclosing a space where materials are stored, in the course of which procedure coating (2) containing detector parts (17) is made, and the detector parts (17) are connected with a detection device (11); **characterised in that**:
- along the internal surface of the wall (1) a laminate monitoring layer (14) having a base layer (16) made of a porous flexible material onto which the detector parts (17) are applied is created in a way that separate monitoring layer parts, each with one detector part (17), at least one surface of which is made of an electrically conductive material formed by a line-pattern having two poles (17a, 17b) suitable for establishing electric contact, are fixed directly of indirectly to the internal surface of the wall (1), and before and/or when fixing the separate monitoring layer parts the base layer (16) is impregnated at least partially with an after-hardening laminating material (18) containing synthetic resin as a binding material;
- applying a covering layer (15) mad of synthetic resin, resistant to mechanical and - optionally - chemical effects onto the monitoring layer (14);
- each detector part (17) is electrically connected to the electronic detection device (11) separately by connecting the two poles (17a, 17b) of each detector part (17) to the detection device (11).

9. Procedure according to claim 8, **characterised in that** flexible and elastic paper, preferably thick filter-paper, practically woven textile made of a natural or artificial material; or porous foil, such as EVA copolymer foil that clings to epoxy resin is used as the base layer.

10. Procedure according to claim 8 or 9, **characterised in that** the material of the detector(17) is made according to the following:
- 60-40 w% of EP resin is mixed with 40-60 w% of solvent and/or diluting agent, and a fluid, viscous material is obtained;
- 10-35 w% of the material obtained in this way is mixed with 6-25 w% of solvent, 40-60 w% of powder metal, preferably copper, silver or nickel powder or a mixture of them, and - optionally - 1-4 w% of thixotropic agent;
- the latter mixture is mixed with a cross-linking agent in a proportion of 2 ÷ 16 : 1, preferably 6 : 1; and
- the viscous material obtained in this way is applied onto at least one surface of the base layer (16) that is a carrier.

11. Procedure according to 10, **characterised in that** 70-98 w% of EP resin is mixed with 2-10 w% of solvent and/or diluting agent until a viscous material is obtained, which is mixed with a preferably organic amine cross-linking agent in a weight proportion of 1 ÷ 6 : 1, preferably 2 : 1; the laminating material obtained in this way is used to impregnate the base layer (16) containing the detector (17) completely, also sealing the detector (17); after the synthetic resin has set, the created monitoring layer (14) parts are fixed to the container wall (1) with an adhesive; or the carrier material containing the detector (17) is completely impregnated with the final product obtained, and it is applied to the wall (1) surface before the resin sets using by this the laminating material itself as an adhesive.

12. Procedure according to claim 11, **characterised in that** a first liquid bisphenol A type EP resin in a proportion of 20-30 w% and a second EP resin suitable for increasing the chemical resistance of the final product in a proportion of 50-80 w% is used for making the mix.

13. Procedure according to claim 11 or 12, **characterised in that** 0.1-0.5 w% of antifoaming agent, 0.1-1.0 w% of anti-bubble agent and - optionally - 0.1-3.0 w% of EP-based dye paste and 1-4 w% of thixotropic agent is added to the mixture.

14. Procedure according to any of claims 11-13, **characterised in that** two types of solvents, 1-5 w% of a volatile solvent, practically methyl ethyl ketone, and another 1-5 w% of a less volatile solvent, preferably ethyl alcohol is used.

15. Procedure according to any of claims 11-14, **characterised in that** the material used for fixing the monitoring layer (14) parts to the container wall (1) is made by
- dissolving 40-60 w% of EP resin in 2-10 w% of solvent into a viscous material, adding 30-60 w% of filling material to it and making a first mixture;
- dissolving 60-80 w% of organic cross-linking agent in 1-5 w% of solvent into a viscous material, adding 15-25 w% of filling material to it and making a second mixture;
- mixing together the first and second mixture in a weight proportion of 2 ÷ 10 : 1, preferably 3.3 : 1; and
- applying the adhesive forming an adhesive bridge between the wall (1) surface and the precast monitoring layer (14) parts, and allow the adhesive layer to set.

16. Procedure according to claim 15, **characterised in that** two types of EP resin are used for making the first mixture, both in a proportion of 20-30 w%; and two types of solvents are used, both in a proportion of 1-5 w%; and - optionally - 0.1-1.0 w% of anti-foaming agent, 0.1-3 w% EP-based dye paste, 1-5 w% of pigment, preferably titanium oxide, 1-4 w% of thixotropic agent, preferably Aerosil, and 0.1-1 w% of anti-bubble agent is added to the mixture.

17. Procedure according to claim 15 or 16, **characterised in that** methyl ethyl ketone is used as a solvent to make the second mixture, and 0.1-1 w% of processing compound and 0.5-5 w% of thixotropic agent is added to it.

18. Procedure according to any of claims 15-17, **characterised in that** talc or/and barytes or/and kaolin or/and silica flour or/and calcium carbonate is used as a filling material.

19. Procedure according to any of claims 8-18, **characterised in that** one side of the base layer (16) is impregnated with epoxy/furan hybrid resin composition as a laminating material only partly - preferably 10-20% of its width -, and after it sets this laminated surface of the monitoring layer (14) parts is fixed to the container wall (1).

20. Procedure according to any of claims 15-18, **characterised in that** the covering layer (15) is made of a material made by the same procedure as the material used for fixing the monitoring layer (14) parts to the container wall (1).

## Patentansprüche

1. System zum Erkennen von Defekten in Wänden mit einer Beschichtung (2) auf ihrer Innenseite und/oder Defekten in der Beschichtung (2), wobei die Wände zum Umschließen eines Raums verwendet werden, in dem Materialien gelagert werden, wobei das System in seiner Beschichtung eingebettete Detektorteile (17) und eine Detektionsvorrichtung (11) in Betriebsverbindung mit den Detektorteilen (17) aufweist;
- die Beschichtung (2) eine Überwachungsschicht (14) aufweist, die direkt oder indirekt an der inneren Oberfläche der Wand (1) befestigt ist, die Überwachungsschicht (14) ein Laminat mit einer Basisschicht (16) aus einem porösen, flexiblen Material ist, auf die die Detektorteile (17) aufgebracht sind, die Überwachungsschicht (14) Teile der Überwachungsschicht definiert, mit je einem Detektorteil (17) unabhängig voneinander in Wirkverbindung mit der Detektionsvorrichtung (11);
- die Basisschicht (16) zumindest teilweise mit einem Laminatmaterial (18) imprägniert ist, das Kunstharz als Bindemittel enthält;
- eine Abdeckschicht (15) aus Kunstharz auf die Überwachungsschicht (14) aufgebracht ist, die resistent gegen mechanische und - optional - chemische Einwirkung ist;
**dadurch gekennzeichnet, dass**
- in jedem Teil der Überwachungsschicht der Detektorteil (17) aus einem elektrisch leitfähigem Material ist und durch Linienmuster gebildet wird, die zwei Pole (17a, 17b) haben, die ausgebildet sind um elektrischen Kontakt herzustellen, und jeder Pol (17a, 17b) mit der Detektionsvorrichtung (11) verbunden ist;
- jeder Detektorteil (17) mit der elektronischen Detektionsvorrichtung (11) separat elektrisch verbunden ist.

2. System gemäß Anspruch 1, **dadurch gekennzeichnet, dass** die Detektorteile (17) aus einem festen Material sind, das aus einer Mischung aus Kunstharz und Pulvermetall besteht.

3. System gemäß Anspruch 1 oder 2, **dadurch gekennzeichnet, dass** die Detektorteile (17) auf den einzelnen Teilen der Überwachungsschicht spiralförmige Linienmuster sind, die durch Drucken mit in einem bestimmten Abstand voneinander entfernten Abschnitten erzeugt sind.

4. System gemäß einem der Ansprüche 1 - 3, **dadurch gekennzeichnet, dass** beide Oberflächen der Basisschicht (16) mit einem Detektor (17) versehen sind.

5. System gemäß einem der Ansprüche 1 - 4, **dadurch gekennzeichnet, dass** benachbarte Teile der Überwachungsschicht (14) so angeordnet sind, dass sich zumindest ihre Kanten überlappen.

6. System gemäß einem der Ansprüche 1 - 5, **dadurch gekennzeichnet, dass** auf die Abdeckschicht (15) eine Kunstharzschicht auf Hybridharzbasis mit antistatischen Eigenschaften aufgebracht ist.

7. System gemäß einem der Ansprüche 1 - 6, **dadurch gekennzeichnet, dass** zwischen der Überwachungsschicht (14) und der inneren Oberfläche der Wand (1) eine Klebstoffschicht auf Kunstharzbasis angeordnet ist.

8. Verfahren zur Herstellung eines Systems zum Erkennen von Defekten in Wänden mit einer Beschichtung (2) auf ihrer Innenseite und/oder Defekten in der Beschichtung (2), wobei die Wände zum Umschließen eines Raums verwendet werden, in dem Materialien gelagert werden, wobei im Verlauf des Verfahrens eine Beschichtung (2) enthaltend Detektorteile (17) hergestellt wird, und die Detektorteile (17) mit einer Detektionsvorrichtung (11) verbunden sind,
**dadurch gekennzeichnet, dass**
- entlang der inneren Oberfläche der Wand (1) eine Laminat-Überwachungsschicht (14) mit einer Basisschicht (16) aus einem flexiblen Material, auf das die Detektorteile (17) aufgebracht sind, so erzeugt ist, dass separate Teile der Überwachungschicht, jeweils mit einem Detektorteil (17), zumindest an einer Oberfläche davon aus einem durch ein Linienmuster gebildeten, elektrisch leitfähigen Material mit zwei Polen (17a, 17b) geformt sind, die zum Herstellen eines elektrischen Kontakts geeignet sind, die direkt oder indirekt an der inneren Oberfläche der Wand (1) befestigt sind und vor und/oder beim Fixieren der separaten Teile der Überwachungsschicht die Basisschicht (16) zumindest teilweise mit einem nachhärtenden Laminiermaterial (18) imprägniert ist, das Kunstharz als ein Bindemittel enthält;
- Aufbringen einer Abdeckschicht (15) aus Kunstharz, das gegen mechanische und - optional - gegen chemische Einwirkung resistent ist, auf die Überwachungsschicht (14);
- jedes Detektorteil (17) ist elektrisch mit der elektronischen Detektionsvorrichtung (11) separat durch Verbinden der zwei Pole (17a, 17b) jedes Detektorteils (17) mit der Detektionsvorrichtung (11) verbunden.

9. Verfahren gemäß Anspruch 8, **dadurch gekennzeichnet, dass** flexibles und elastisches Papier, vorzugsweise dickes Filterpapier, zweckmäßig gewebtes Textil aus einem natürlichen oder künstlichen Material; oder poröse Folie, wie eine EVA-Copolymerfolie die an Epoxidharz haftet, als die Basisschicht verwendet wird.

10. Verfahren gemäß Anspruch 8 oder 9, **dadurch gekennzeichnet, dass** das Material des Detektors (17) wie folgt hergestellt wird:
- 60 - 40 Gew.-% EP-Harz wird mit 40 - 60 Gew.-% Lösungsmittel und/oder Verdünnungsmittel gemischt, und ein flüssiges, viskoses Material wird erhalten;
- 10 - 35 Gew.-% des auf diese Weise erhaltenen Materials werden mit 6 - 25 Gew.-% Lösungsmittel, 40 - 60 Gew.-% Pulvermetall, vorzugsweise Kupfer-, Silber- oder Nickelpulver oder einer Mischung davon, und - gegebenenfalls - 1 - 4 Gew.-% Thixotropiermittel gemischt;
- die genannte Mischung wird mit einem Vernetzungsmittel in einem Verhältnis von 2-16:1, vorzugsweise 6:1, gemischt; und
- das auf diese Weise erhaltene, viskose Material wird auf wenigstens eine Oberfläche der Basisschicht (16), die ein Träger ist, aufgebracht.

11. Verfahren gemäß Anspruch 10, **dadurch gekennzeichnet, dass** 70 - 98 Gew.-% EP-Harz mit 2 - 10 Gew.-% Lösungsmittel und/oder Verdünnungsmittel gemischt werden, bis ein viskoses Material erhalten wird, das mit einem vorzugsweise organischen Amin-Vernetzungsmittel in einem Gewichtsverhältnis von 1-6:1, vorzugsweise 2:1, gemischt wird; das auf diese Weise gewonnene Laminiermaterial wird verwendet, um die den Detektor (17) enthaltende Basisschicht (16) vollständig zu imprägnieren, und auch den Detektor (17) abzudichten; nachdem das Kunstharz ausgehärtet ist, werden die erzeugten Teile der Überwachungsschicht (14) mit einem Klebstoff an der Behälterwand (1) befestigt; oder das Trägermaterial, das den Detektor (17) enthält, ist vollständig mit dem gewonnenen Endprodukt imprägniert und wird vor dem Aushärten des Harzes auf die Oberfläche der Wand (1) aufgetragen, wobei das Laminiermaterial selbst als Klebstoff verwendet wird.

12. Verfahren gemäß Anspruch 11, **dadurch gekennzeichnet, dass** ein erstes flüssiges EP-Harz vom Bisphenol-A-Typ in einem Anteil von 20 - 30 Gew.-% und ein zweites EP-Harz, das geeignet ist, die chemische Beständigkeit des Endprodukts zu erhöhen, in einem Anteil von 50 - 80 Gew.-% zur Herstellung der Mischung verwendet wird.

13. Verfahren gemäß Anspruch 11 oder 12, **dadurch gekennzeichnet, dass** 0,1 - 0,5 Gew.-% Antischaummittel, 0,1 - 1,0 Gew .-% Anti-Blasen-Mittel und - gegebenenfalls - 0,1 - 3,0 Gew.-% Farbstoffpaste auf EP-Basis und 1 - 4 Gew.-% Thixotropiermittel zu der Mischung gegeben werden.

14. Verfahren gemäß einem der Ansprüche 11 - 13, **dadurch gekennzeichnet, dass** zwei Arten von Lösungsmitteln, 1 - 5 Gew.-% eines flüchtigen Lösungsmittels, zweckmäßig Methylethylketon, und weitere 1 - 5 Gew.-% eines weniger flüchtigen Lösungsmittels, vorzugsweise Ethylalkohol, verwendet werden.

15. Verfahren gemäß einem der Ansprüche 11 -14, **dadurch gekennzeichnet, dass** das Material, das zum Befestigen der Teile der Überwachungsschicht (14) an der Behälterwand verwendet wird, hergestellt ist durch
- Auflösen von 40 - 60 Gew.-% EP-Harz in 2 - 10 Gew.-% Lösungsmittel zu einem viskosen Material, Zugeben von 30 - 60 Gew.-% Füllmaterial dazu und Herstellen einer ersten Mischung
- Auflösen von 60 - 80 Gew.-% organischem Vernetzungsmittel in 1 - 5 Gew.-% Lösungsmittel zu einem viskosen Material, Zugeben von 15-25 Gew.-% Füllmaterial dazu und Herstellen einer zweiten Mischung;
- Mischen der ersten und zweiten Mischung in einem Gewichtsverhältnis von 2-10:1, vorzugsweise 3,3:1; und
- Auftragen des Klebstoffs, der eine Klebstoffbrücke zwischen der Oberfläche der Wand (1) und den vorgefertigten Teilen der Überwachungsschicht (14) bildet, und Aushärtenlassen der Klebstoffschicht.

16. Verfahren gemäß Anspruch 15, **dadurch gekennzeichnet, dass** zwei Arten von EP-Harz zur Herstellung der ersten Mischung verwendet werden, beide in einem Anteil von 20 - 30 Gew.-%; und zwei Arten von Lösungsmitteln verwendet werden, beide in einem Anteil von 1 - 5 Gew.-%; und - gegebenenfalls - 0,1 - 1,0 Gew.-% Antischaummittel, 0,1 - 3 Gew.-% Farbstoffpaste auf EP-Basis, 1 - 5 Gew.-% Pigment, vorzugsweise Titanoxid, 1 - 4 Gew.-% Thixotropiermittel, vorzugsweise Aerosil, und 0,1 - 1 Gew.-% Anti-Blasen-Mittel zu der Mischung gegeben werden.

17. Verfahren gemäß Anspruch 15 oder 16, **dadurch gekennzeichnet, dass** Methylethylketon als Lösungsmittel zur Herstellung der zweiten Mischung verwendet wird und 0,1 - 1 Gew.-% Verarbeitungshilfsmittel und 0,5 - 5 Gew.-% Thixotropiermittel dazu gegeben werden.

18. Verfahren gemäß einem der Ansprüche 15 - 17, **dadurch gekennzeichnet, dass** Talk und/oder Baryt und/oder Kaolin und/oder Kieselsäuremehl und/oder Calciumcarbonat als Füllmaterial verwendet wird.

19. Verfahren gemäß einem der Ansprüche 8 - 18, **dadurch gekennzeichnet, dass** eine Seite der Basisschicht (16) mit Epoxy/Furan-Hybridharzzusammensetzung als Laminiermaterial nur teilweise - vorzugsweise auf 10 - 20 % der Breite - imprägniert wird und nach dessen Härten diese laminierte Oberfläche der Teile der Überwachungsschicht (14) an der Behälterwand (1) befestigt wird.

20. Verfahren gemäß einem der Ansprüche 15 - 18, **dadurch gekennzeichnet, dass** die Abdeckschicht (15) aus einem Material hergestellt ist, das gemäß demselben Verfahren wie das Material, das zur Befestigung der Teile der Überwachungschicht (14) an der Behälterwand (1) verwendet wird, hergestellt ist.

## Revendications

1. Système de détection des défauts d'une paroi avec un revêtement (2) sur sa surface interne et/ou des défauts dans le revêtement (2), les parois servant à entourer un espace où des matériaux sont stockés, lequel système présente des parties détectrices (17) intégrées dans son revêtement et un dispositif de détection (11) en liaison fonctionnelle avec les parties détectrices (17) ;
- le revêtement (2) présente une couche de contrôle (14) directement ou indirectement fixée à la surface interne de la paroi (1), la couche de contrôle (14) est un stratifié avec une couche de base (16) réalisée en matériau poreux souple sur lequel les parties détectrices (17) sont appliquées, la couche de contrôle (14) définissant des parties de couche de contrôle, chacune avec une partie détectrice (17) en liaison fonctionnelle avec le dispositif de détection (11) indépendamment les unes des autres ;
- la couche de base (16) est au moins en partie imprégnée d'un matériau de stratification (18) contenant une résine synthétique comme matériau de liaison ;
- une couche de couverture (15) réalisée en résine synthétique qui est résistante aux effets mécaniques et éventuellement chimiques, est appliquée sur la couche de contrôle (14) ;
**caractérisé en ce que** :
- dans chaque partie de couche de contrôle, la partie détectrice (17) est en matériau électriquement conducteur formé d'un motif de ligne ayant deux pôles (17a, 17b) configurés pour établir un contact électrique et chaque pôle (17a, 17b) étant connecté au dispositif de détection (11) ;
- chaque partie détectrice (17) est électriquement connectée au dispositif de détection électronique (11) séparément.

2. Système selon la revendication 1, **caractérisé en ce que** les parties détectrices (17) sont réalisées en un matériau solide constitué d'un mélange de résine synthétique et de poudre métallique.

3. Système selon la revendication 1 ou 2, **caractérisé en ce que** les parties détectrices (17) sur les parties de couche de contrôle individuelles sont des motifs de ligne en spirale créés par impression avec des sections espacées à une certaine distance les unes des autres.

4. Système selon l'une des revendications 1 à 3, **caractérisé en ce que** les deux surfaces de la couche de base (16) sont pourvues d'un détecteur (17).

5. Système selon l'une des revendications 1 à 4, **caractérisé en ce que** les parties de couche de contrôle avoisinantes (14) sont agencées de manière à ce qu'au moins leurs bords se chevauchent.

6. Système selon l'une des revendications 1 à 5, **caractérisé en ce qu'**une couche de résine synthétique à base de résine hybride présentant des caractéristiques antistatiques est appliquée sur la couche de couverture (15).

7. Système selon l'une des revendications 1 à 6, **caractérisé en ce qu'**une couche adhésive à base de résine synthétique est insérée entre la couche de contrôle (14) et la surface interne de la paroi (1).

8. Procédure de fabrication d'un système de détection des défauts d'une paroi avec un revêtement (2) sur sa surface interne et/ou des défauts dans le revêtement (2), les parois servant à entourer un espace où des matériaux sont stockés, au cours de laquelle procédure, un revêtement (2) contenant des parties détectrices (17) est réalisé, et les parties détectrices (17) sont connectées à un dispositif de détection (11) ;
**caractérisée en ce que** :
- le long de la surface interne de la paroi (1), une couche de contrôle stratifiée (14) ayant une couche de base (16) réalisée en matériau poreux souple sur laquelle les parties détectrices (17) sont appliquées est créée de manière à ce que des parties de couche de contrôle séparées, avec chacune une partie détectrice (17), dont au moins une surface est réalisée en matériau électriquement conducteur formé par un motif de ligne ayant deux pôles (17a, 17b) propres à établir un contact électrique, soient directement ou indirectement fixées à la surface interne de la paroi (1), et avant et/ou lors de la fixation des parties de couche de contrôle séparées, la couche de base (16) soit imprégnée au moins partiellement d'un matériau de stratification après-durcissement (18) contenant une résine synthétique comme matériau liant ;
- appliquer une couche de couverture (15) réalisée en résine synthétique qui est résistante aux effets mécaniques et éventuellement chimiques, sur la couche de contrôle (14) ;
- chaque partie détectrice (17) est électriquement connectée au dispositif de détection électronique (11) séparément en connectant les deux pôles (17a, 17b) de chaque partie détectrice (17) au dispositif de détection (11).

9. Procédure selon la revendication 8, **caractérisée en ce qu'**un papier souple et élastique, de préférence un papier filtre épais, pratiquement un textile tissé réalisé en matériau naturel ou artificiel ; ou une feuille poreuse, telle qu'une feuille de copolymère EVA qui adhère à la résine époxy, est utilisé(e) comme couche de base.

10. Procédure selon la revendication 8 ou 9, **caractérisée en ce que** le matériau du détecteur (17) est réalisé comme suit :
- 60-40 % en poids de résine EP sont mélangés à 40-60 % en poids de solvant et/ou de diluant, et un matériau fluide et visqueux est obtenu ;
- 10-35 % en poids du matériau ainsi obtenu sont mélangés à 6-25 % en poids de solvant, 40-60 % en poids de poudre métallique, de préférence poudre de cuivre, d'argent ou de nickel ou un mélange de ceux-ci, et éventuellement 1-4 % en poids d'agent thixotropique ;
- ce dernier mélange est mélangé à un agent de réticulation dans une proportion de 2÷16:1, de préférence 6:1 ; et
- le matériau visqueux ainsi obtenu est appliqué sur au moins une surface de la couche de base (16) qui constitue un support.

11. Procédure selon la revendication 10, **caractérisée en ce que** 70-98 % en poids de résine EP sont mélangés à 2-10 % en poids de solvant et/ou de diluant jusqu'à obtention d'un matériau visqueux qui est mélangé de préférence à un agent de réticulation aminé organique dans une proportion en poids de 1 ÷16:1, de préférence 2:1 ; le matériau de stratification ainsi obtenu est utilisé pour imprégner complètement la couche de base (16) contenant le détecteur (17), également scellant le détecteur (17) ; après le durcissement de la résine synthétique, les parties de couche de contrôle créées (14) sont fixées à la paroi (1) du récipient avec un adhésif ; ou le matériau support contenant le détecteur (17) est complètement imprégné du produit final obtenu, et est appliqué à la surface de la paroi (1) avant que la résine ne durcisse, utilisant ainsi le matériau de stratification lui-même comme adhésif.

12. Procédure selon la revendication 11, **caractérisée en ce qu'**une première résine EP liquide de type bisphénol A dans une proportion de 20-30 % en poids et une seconde résine EP propre à augmenter la résistance chimique du produit final dans une proportion de 50-80 % en poids est utilisée pour réaliser le mélange.

13. Procédure selon la revendication 11 ou 12, **caractérisée en ce que** 0,1-0,5 % en poids d'agent antimousse, 0,1-1,0 % en poids d'agent antibulle et éventuellement 0,1-3,0 % en poids de colorant en pâte à base de EP et 1-4 % en poids d'agent thixotropique sont ajoutés au mélange.

14. Procédure selon l'une des revendications 11 à 13, **caractérisée en ce que** deux types de solvants, 1-5 % en poids d'un solvant volatil, pratiquement méthyléthylcétone, et un autre 1-5 % en poids d'un solvant moins volatil, de préférence alcool éthylique, sont utilisés.

15. Procédure selon l'une des revendications 11 à 14, **caractérisée en ce que** le matériau utilisé pour fixer les parties de couche de contrôle (14) à la paroi (1) du récipient est réalisé en :
- dissolvant 40-60 % en poids de résine EP dans 2-10 % en poids de solvant dans un matériau visqueux, en y ajoutant 30-60 % en poids de matériau de remplissage et en réalisant un premier mélange ;
- dissolvant 60-80 % en poids d'agent de réticulation organique dans 1-5 % en poids de solvant dans un matériau visqueux, en y ajoutant 15-25 % en poids de matériau de remplissage et en réalisant un second mélange ;
- mélangeant les premier et deuxième mélanges dans une proportion en poids de 2÷10:1, de préférence 3,3:1 ; et
- appliquant l'adhésif formant un pont adhésif entre la surface de la paroi (1) et les parties de couche de contrôle préfabriquées (14), et en permettant à la couche adhésive de durcir.

16. Procédure selon la revendication 15, **caractérisée en ce que** deux types de résine EP sont utilisés pour réaliser le premier mélange, tous deux dans une proportion de 20-30 % en poids ; et deux types de solvants sont utilisés, tous deux dans une proportion de 1-5 % en poids, et éventuellement 0,1-1,0 % en poids d'agent antimousse, 0,1-3 % en poids d'un colorant en pâte à base de EP, 1-5 % en poids de pigment, de préférence oxyde de titane, 1-4 % en poids d'agent thixotropique, de préférence Aérosil, et 0,1-1 % en poids d'agent antibulle, sont ajoutés au mélange.

17. Procédure selon la revendication 15 ou 16, **caractérisée en ce que** la méthyléthylcétone est utilisée comme solvant pour réaliser le second mélange, et 0,1-1 % en poids de composé de traitement et 0,5-5 % en poids d'agent thixotropique y sont ajoutés.

18. Procédure selon l'une des revendications 15 à 17, **caractérisée en ce que** du talc et/ou des barytes ou/et du kaolin ou/et de la farine de silice ou/et du carbonate de calcium sont utilisés comme matériau de remplissage.

19. Procédure selon l'une des revendications 8 à 18, **caractérisée en ce qu'**un côté de la couche de base (16) est imprégné d'une composition de résine hybride époxy/furanne comme matériau de stratification seulement en partie - de préférence 10-20 % de sa largeur - et, après son durcissement, cette surface stratifiée des parties de couche de contrôle (14) est fixée à la paroi (1) du récipient.

20. Procédure selon l'une des revendications 15 à 18, **caractérisée en ce que** la couche de couverture (15) est réalisée en un matériau fabriqué selon la même procédure que le matériau utilisé pour fixer les parties de couche de contrôle (14) à la paroi (1) du récipient.
